# EUROPÄISCHE PATENTSCHRIFT

(11) **EP 3 452 366 B1**
(45) Veröffentlichungstag und Bekanntmachung des Hinweises auf die Patenterteilung: **29.11.2023**
(21) Anmeldenummer: 17724507.3
(22) Anmeldetag: 04.05.2017
(51) Int. Cl.: B64D 11/00

(54) **ÜBERWACHUNGSSYSTEM FÜR MOBILE AUSRÜSTUNGSVORRICHTUNGEN IN EINEM LUFTFAHRZEUG UND ÜBERWACHUNGSVERFAHREN**
MONITORING SYSTEM FOR MOBILE ACCESSORY DEVICES IN AN AIRCRAFT AND MONITORING METHOD
SYSTÈME DE SURVEILLANCE POUR DISPOSITIFS D'ÉQUIPEMENT MOBILES DANS UN AÉRONEF ET PROCÉDÉ DE SURVEILLANCE

(30) Priorität: 04.05.2016 US 201662331723 P
(43) Veröffentlichungstag der Anmeldung: 13.03.2019
(73) Patentinhaber: Sell GmbH, 35745 Herborn (DE)
(72) Erfinder: CHRISTIAN, Nathalie, 35641 Schöffengrund (DE); KUSCH, Alexander, 35745 Herborn (DE); KLASSEN, Samuel, 35708 Haiger (DE)
(74) Vertreter: Neugebauer, Jürgen
(86) Internationale Anmeldenummer: PCT/EP2017/060670
(87) Internationale Veröffentlichungsnummer: WO 2017/191262

(56) Entgegenhaltungen:
- EP-A2- 0 895 212
- WO-A2-2012/166545
- DE-A1-102007 011 208
- US-A1- 2011 090 064

## Beschreibung

Die vorliegende Erfindung betrifft ein Überwachungssystem für ein Luftfahrzeug zum Überwachen von in dem Luftfahrzeug mobilen Ausrüstungsvorrichtungen, die insbesondere als Rollcontainer für eine Bordküche des Luftfahrzeugs ausgebildet sind, nach Gattung des unabhängigen Anspruchs 1. Gegenstand der Erfindung ist auch ein Verfahren zum Überwachen von in einem Luftfahrzeug angeordneten mobilen Ausrüstungsvorrichtungen gemäß Anspruch 15.

### Stand der Technik

In heutigen Luftfahrzeugen, insbesondere in Passagierflugzeugen, werden mobile Ausrüstungsvorrichtungen, insbesondere Rollcontainer, auch Trolleys genannt, mitgeführt und können während eines Flugs des Luftfahrzeugs beispielsweise durch Bordkabinenpersonal in einer Bordküche, auch Galley genannt, oder in Gängen des Luftfahrzeugs bewegt werden. Zum Verstauen bzw. sicheren Abstellen dieser mobilen Ausrüstungsvorrichtungen bei kritischen Flugphasen, wie beispielsweise bei Start und Landung des Flugzeugs, aber auch bei Turbulenzen, sind in dem Luftfahrzeug innerhalb der Bordküche Staufächer, auch Compartments genannt, vorgesehen.

Um zu überwachen, dass die mobilen Ausrüstungsvorrichtungen während ihrer Nicht-Nutzung in den Staufächern abgestellt sind, ist in dem Luftfahrzeug ein aus einer Zentraleinheit und stationären Sensorvorrichtungen gebildetes Überwachungssystem eingebaut. Die Staufächer sind jeweils mit einer stationären Sensorvorrichtung ausgerüstet, die detektiert, ob oder ob nicht eine mobile Ausrüstungsvorrichtung in dem jeweiligen Staufach aufgenommen ist. Die Detektierergebnisse der stationären Sensorvorrichtungen werden an die Zentraleinheit gemeldet. Wenn eine stationäre Sensorvorrichtung eine in dem zugehörigen Staufach aufgenommene mobile Ausrüstungsvorrichtung detektiert und diese Detektierung als ein Detektierergebnis an die Zentraleinheit meldet, bewertet die Zentraleinheit den Sicherungszustand dieser mobilen Ausrüstungsvorrichtung als sicher bzw. gesichert. Andernfalls bewertet die Zentraleinheit den Sicherungszustand dieser mobilen Ausrüstungsvorrichtung als unsicher bzw. ungesichert. Nur wenn die stationären Sensorvorrichtungen aller von der Zentraleinheit überwachten Staufächer eine jeweilige darin abgestellte mobile Ausrüstungsvorrichtung detektieren und somit positive Detektierergebnisse an die Zentraleinheit melden, bewertet die Zentraleinheit den Sicherungszustand aller überwachter Ausrüstungsvorrichtungen als sicher. Diese Überwachung ist gut für die Startphase eines Luftfahrzeugs, ist aber zu unflexibel ab dem Zeitpunkt, wenn die mobilen Ausrüstungsvorrichtungen nach der Startphase vom Bordkabinenpersonal aus den Staufächern entnommen worden sind. Das Dokument US2011/090064 zeigt ein System zur Lagerhaltung in einer Flugzeugbordküche. In WO2012/166545 wird ein System zur Lokalisierung von Teilen im Flugzeug bei Montage und Wartung beschrieben.

### Offenbarung der Erfindung

Der vorliegenden Erfindung liegt daher die Aufgabe zugrunde, ein Überwachungssystem und ein Überwachungsverfahren zum Überwachen von mobilen Ausrüstungsvorrichtungen im Luftfahrzeug bereitzustellen, die eine effizientere, sicherere und flexiblere Überwachung insbesondere nach der Startphase des Luftfahrzeugs ermöglichen. Zudem ist es wünschenswert, wenn das Überwachungssystem und das Überwachungsverfahren das Bordkabinenpersonal über aktuelle Positionen aller oder zumindest mancher der mobilen Ausrüstungsvorrichtungen informieren kann. Dann könnte das Bordkabinenpersonal bei auftretenden Turbulenzen die mobilen Ausrüstungsvorrichtungen ohne möglicherweise vorherige langwierige Suche schnell verstauen.

Die Aufgabe der vorliegenden Erfindung wird durch ein Überwachungssystem mit den Merkmalen des Anspruchs 1 sowie durch ein Überwachungsverfahren mit den Merkmalen des Anspruchs 15 gelöst. Vorteilhafte Weiterbildungen ergeben sich aus den Merkmalen der abhängigen Ansprüche.

Das vorgestellte Überwachungssystem für ein Luftfahrzeug, insbesondere ein Flugzeug, zum Überwachen von mobilen Ausrüstungsvorrichtungen in dem Luftfahrzeug umfasst eine Zentraleinheit und mindestens eine stationäre Sensorvorrichtung. Die mindestens eine stationäre Sensorvorrichtung ist ausgebildet zum Detektieren einer mobilen Ausrüstungsvorrichtung, wenn sich die mobile Ausrüstungsvorrichtung innerhalb eines vorgegebenen Umgebungsbereichs der stationären Sensorvorrichtung befindet. Die mindestens eine stationäre Sensorvorrichtung ist ausgebildet zum Melden an die Zentraleinheit, ob oder ob nicht sie eine mobile Ausrüstungsvorrichtung innerhalb des vorgegebenen Umgebungsbereichs detektiert hat, als ein Detektierergebnis. Bevorzugt weist das Überwachungssystem mehrere derartige stationäre Sensorvorrichtungen auf. Jede dieser stationären Sensorvorrichtungen ist an einem jeweiligen individuellen Ort in dem Luftfahrzeug fixiert. Die mobilen Ausrüstungsvorrichtungen sind in dem Luftfahrzeug relativ zu den stationären Sensorvorrichtungen beweglich. Die Zentraleinheit ist ausgebildet zum Ermitteln und Bewerten eines Sicherungszustands der überwachten mobilen Ausrüstungsvorrichtungen auf Grundlage der von der oder den stationären Sensorvorrichtung(en) gemeldeten Detektierergebnisse.

Der Erfindung liegt die Erkenntnis zugrunde, dass eine mobile Ausrüstungsvorrichtung sich nicht nur bei Aufnahme in einem Staufach, sondern auch außerhalb eines Staufachs, beispielsweise bei einer Nutzung durch eine Bordkabinenperson, in einem sicheren Zustand befinden kann. Dies ist der Fall, wenn die Bordkabinenperson sich in einer ausreichenden Nähe zu der mobilen Ausrüstungsvorrichtung befindet, um eine persönliche Kontrolle über die mobile Ausrüstungsvorrichtung ausüben zu können.

Gemäß dieser Erkenntnis wird vorgeschlagen, dass das Überwachungssystem zusätzlich zu den stationären Sensorvorrichtungen mindestens eine mobile Sensorvorrichtung aufweist, die ausgebildet ist zum Detektieren einer mobilen Ausrüstungsvorrichtung der zu überwachenden mobilen Ausrüstungsvorrichtungen, wenn sich diese mobile Ausrüstungsvorrichtung innerhalb einer vorgegebenen Entfernung zu der mobilen Sensorvorrichtung bzw. innerhalb eines vorgegebenen Umgebungsbereichs der Sensorvorrichtung befindet, und zum Melden des Detektierergebnisses an die Zentraleinheit. Die mindestens eine mobile Sensorvorrichtung ist bevorzugt in dem vorgestellten Überwachungssystem in einer Mehrzahl bereitgestellt. Die mindestens eine mobile Sensorvorrichtung ist relativ zu den mobilen Ausrüstungsvorrichtungen mobil bzw. beweglich und ist keinesfalls fest an einer der mobilen Ausrüstungsvorrichtungen während des Betriebs des vorgestellten Überwachungssystems befestigt. Die mindestens eine mobile Sensorvorrichtung ist auch relativ zu den stationären Sensorvorrichtungen beweglich. Die mindestens eine mobile Sensorvorrichtung ist vorgesehen, von einer Bordkabinenperson während des Flugs und insbesondere während der Nutzung der mobilen Ausrüstungsvorrichtung außerhalb des Staufachs, beispielsweise während eines Ausgebens von Mahlzeiten aus der als Rollcontainer ausgestalteten Ausrüstungsvorrichtung an Passagiere, getragen zu werden.

Eine jeweilige mobile Sensorvorrichtung ist ausgebildet zum alternativen Detektieren der Anwesenheit oder Abwesenheit einer innerhalb eines vorgegebenen Umgebungsbereichs bzw. innerhalb einer vorgegebenen Entfernung zu der mobilen Sensorvorrichtung angeordneten mobilen Ausrüstungsvorrichtung und ist beispielsweise als eine Antennenvorrichtung oder eine Bilderfassungsvorrichtung ausgestaltet. Die Antennenvorrichtung ist vorgesehen zum Erfassen einer von einer mobilen Ausrüstungsvorrichtung ausgestrahlten Strahlung. Ferner ist eine jeweilige mobile Sensorvorrichtung ausgebildet zum drahtlosen Übermitteln ihrer Detektierergebnisse per Funk an die Zentralsteuereinheit. Die mindestens eine mobile Sensorvorrichtung detektiert eine Anwesenheit einer zu überwachenden mobilen Ausrüstungsvorrichtung, wenn sich die mobile Ausrüstungsvorrichtung innerhalb einer vorgegebenen Entfernung von bevorzugt 5 Metern, besonders bevorzugt 3 Metern und sehr besonders bevorzugt 1,5 Metern zu der mobilen Sensorvorrichtung befindet.

Die mindestens eine mobile Sensorvorrichtung ermöglicht es, ein flexibler auf die außerhalb der Staufächer stattfindende Nutzung der mobilen Ausrüstungsvorrichtungen reagierendes Überwachungssystem zu realisieren. Auch wenn nicht alle der überwachten mobilen Ausrüstungsvorrichtungen innerhalb eines vorgegebenen Umgebungsbereichs einer jeweiligen stationären Sensorvorrichtung angeordnet sind, bewertet die Zentraleinheit dieses nicht automatisch als einen unsicheren Sicherungszustand der mobilen Ausrüstungsvorrichtungen. Mittels der mindestens einen mobilen Sensorvorrichtung berücksichtigt die Zentraleinheit für ihre Bewertung des aktuellen Sicherungszustands der mobilen Ausrüstungsvorrichtungen, ob oder ob nicht eine außerhalb des vorgegebenen Umgebungsbereichs einer stationären Sensorvorrichtung angeordnete mobile Ausrüstungsvorrichtung aktuell unter der Kontrolle bzw. Beaufsichtigung einer Bordkabinenperson steht.

Eine jeweilige stationäre Sensorvorrichtung ist ausgebildet zum alternativen Detektieren der Anwesenheit oder Abwesenheit einer innerhalb eines vorgegebenen Umgebungsbereichs bzw. innerhalb einer vorgegebenen Entfernung zu der stationären Sensorvorrichtung angeordneten mobilen Ausrüstungsvorrichtung und ist beispielsweise als Erfassungsvorrichtung zum funkbasierten, induktiven, kapazitiven, optischen, akustischen, und/oder mechanischen Detektieren einer mobilen Ausrüstungsvorrichtung ausgestaltet. Beispielhaft für eine derartige stationäre Sensorvorrichtung seien genannt: Antennenvorrichtung, Bilderfassungsvorrichtung, optischer, thermischer, oder akustischer Annäherungsschalter, Kontaktschalter.

Die Zentraleinheit ist ausgebildet zum vorzugsweise funkbasierten Empfangen von Detektierergebnissen der mindestens einen mobilen Sensorvorrichtung und zum drahtbasierten und/oder drahtlosen Empfangen von Detektierergebnissen der mindestens einen stationären Sensorvorrichtung. Die Zentraleinheit kann ausgebildet sein, die Detektierergebnisse von den mobilen und/oder stationären Sensorvorrichtungen von diesen anzufordern.

Die mobilen Ausrüstungsvorrichtungen sind insbesondere als durch Bordkabinenpersonal bewegbare Rollcontainer, auch Trolleys genannt, ausgebildet und zur Verwendung in einer Bordküche des Luftfahrzeugs und zum Ausbringen von Mahlzeiten und Getränken an Passagiere des Luftfahrzeugs durch Bordkabinenpersonal vorgesehen.

In einer Weiterbildung des vorgestellten Überwachungssystems ist vorgesehen, dass die mindestens eine stationäre Sensorvorrichtung einem jeweiligen Staufach, insbesondere dem einer Bordküche, des Luftfahrzeugs zugeordnet ist und ausgebildet ist zum Detektieren und Melden an die Zentraleinheit, ob oder ob nicht eine der mobilen Ausrüstungsvorrichtungen in dem Staufach aufgenommen ist. Ein Detektieren einer in dem Staufach anwesenden mobilen Ausrüstungsvorrichtung durch eine stationäre Sensorvorrichtung entspricht einer sich in einem vorgegebenen Umgebungsbereich der stationären Sensorvorrichtung anwesenden bzw. detektierten mobilen Ausrüstungsvorrichtung.

In einer Weiterbildung des vorgestellten Überwachungssystems ist vorgesehen, dass die Zentraleinheit ausgebildet ist zum Bewerten, dass sich eine aktuell von der mobilen Sensorvorrichtung detektierbare mobile Ausrüstungsvorrichtung nicht in einem unsicheren Sicherungszustand befindet. Die Zentraleinheit kann den Sicherungszustand einer mobilen Ausrüstungsvorrichtung, die sich innerhalb einer vorgegebenen Entfernung zu der mobilen Sensorvorrichtung bzw. innerhalb deren vorgegebenen Umgebungsbereich befindet, identisch zu dem Sicherungszustand einer durch eine stationäre Sensorvorrichtung detektierten Anwesenheit einer mobilen Ausrüstungsvorrichtung bewerten, beispielsweise als sicher bzw. gesichert, oder abweichend davon bewerten, beispielsweise als durch Bordkabinenpersonal überwacht. Die Zentraleinheit bewertet den Sicherungszustand einer mobilen Ausrüstungsvorrichtung nur dann als unsicher, wenn für eine der Zentraleinheit bekannte mobile Ausrüstungsvorrichtung weder ein positives Detektierergebnis einer der stationären Sensorvorrichtungen noch ein positives Detektierergebnis einer der mobilen Sensorvorrichtungen des vorgestellten Überwachungssystems vorliegt. Dadurch wird die Bereitstellung eines flexibel auf unterschiedliche Nutzungsszenarien der mobilen Ausrüstungsvorrichtungen reagierendes Überwachungssystem realisiert.

Ferner ist in einer Weiterbildung des vorgestellten Überwachungssystems vorgesehen, dass die mindestens eine mobile Sensorvorrichtung ausgebildet ist zum Übermitteln einer einem aktuellen Benutzer der mobilen Sensorvorrichtung zugeordneten Benutzerinformation an die Zentraleinheit, wenn die mobile Sensorvorrichtung eine mobile Ausrüstungsvorrichtung innerhalb der vorgegebenen Entfernung detektiert. Die Benutzerinformation spezifiziert den aktuellen Benutzer der mobilen Sensorvorrichtung zum Zeitpunkt der Übermittlung der Benutzerinformation. Auf Grundlage der übermittelten Benutzerinformation ist eine Identifizierung der die detektierte mobile Ausrüstungsvorrichtung beaufsichtigenden Person möglich.

Außerdem ist in einer Weiterbildung des vorgestellten Überwachungssystems vorgesehen, dass eine jeweilige mobile Sensorvorrichtung einem indivduellen Benutzer fest zugeordnet ist und ausgebildet ist zum Melden des Benutzers an die Zentraleinheit. Die feste Zuordnung kann beispielsweise durch eine in die mobile Sensorvorrichtung einsetzbare Chipkarte festgelegt sein, die dem Benutzer fest zugeordnet ist. Die mobile Servervorrichtung kann auch mit einer biometrischen Erfassungseinheit zum Erfassen mindestens eines biometrischen Merkmals des individuellen Benutzers, wie beispielsweise eines Fingerabdrucks oder eines Scans der Augeniris, versehen sein. Nach dem erstmaligen Erfassen des biometrischen Merkmals bei der Inbetriebnahme der mobilen Sensorvorrichtung identifiziert die mobile Sensorvorrichtung sich bzw. ihren Benutzer gegenüber der Zentraleinheit mittels Übertragung erfasster biometrischer Daten an die Zentraleinheit. Da jedem Benutzer bekannt ist, dass die Meldungen seiner mobilen Sensorvorrichtung eindeutig ihm zugeordnet werden können, werden das Verantwortungsbewusstsein und die Aufmerksamkeit jedes Benutzers hinsichtlich sich in der Nähe befindender mobiler Ausrüstungsvorrichtungen gesteigert. Dadurch, dass jeder Benutzer für die Beaufsichtigung einer zu ihm benachbarten mobilen Ausrüstungsvorrichtung verantwortlich gemacht werden kann, wird das Verantwortungsbewusstssein jedes Benutzers der mobilen Sensorvorrichtungen und letztlich auch die Flugsicherheit gesteigert.

Außerdem ist in einer Weiterbildung des vorgestellten Überwachungssystems vorgesehen, dass eine jeweilige mobile Sensorvorrichtung ein Bestandteil einer Kleidung eines individuellen Benutzers ist. Der Benutzer ist bevorzugt eine Bordkabinenperson, und die Kleidung ist bevorzugt eine Dienstbekleidung dieser Bordkabinenperson. Eine derartige Integration der mobilen Sensorvorrichtung in die individuelle Dienstbekleidung stellt dauerhaft die unmittelbare Nähe der mobilen Sensorvorrichtung zu ihrem Benutzer sicher. Eine eindeutig einem Benutzer zugeordnete mobile Sensorvorrichtung, die zudem ein Kleidungsstück dieses Benutzers ist oder in ein Kleidungsstück des Benutzers integriert ist, macht dem Benutzer die Verantwortung für eine zu ihm benachbarte mobile Ausrüstungsvorrichtung sehr deutlich, so letztlich die Flugsicherheit gesteigert wird.

In einer Weiterbildung des vorgestellten Überwachungssystems ist vorgesehen, dass die mindestens eine stationäre Sensorvorrichtung ausgebildet ist zum Identifizieren einer von ihr detektierten mobilen Ausrüstungsvorrichtung und zum Melden einer die identifizierte Ausrüstungsvorrichtung spezifizierenden Identifizierungsinformation an die Zentraleinheit. In einer Fortbildung dieser Weiterbildung oder in einer alternativen Weiterbildung des vorgestellten Überwachungssystems ist zudem vorgesehen, dass die mindestens eine mobile Sensorvorrichtung ausgebildet ist zum Identifizieren einer von ihr detektierten mobilen Ausrüstungsvorrichtung und zum Melden einer die identifizierte Ausrüstungsvorrichtung spezifizierenden Identifizierungsinformation an die Zentraleinheit. Damit eine mobile Ausrüstungsvorrichtung durch die stationären und/oder mobilen Sensorvorrichtungen identifizierbar ist, ist die mobile Ausrüstungsvorrichtung mit einem bevorzugt eindeutigen Identifizierer versehen. Der Identifizierer kann beispielsweise ein Aufkleber mit einem optisch auslesbaren Code, ein durch die Sensorvorrichtungen auslesbarer RFID-Chip (RFID = Radio Frequency IDentification) oder ein von der zu identifizierenden mobilen Ausrüstungsvorrichtung an die Sensorvorrichtung gesendeter Code sein. Die Zentraleinheit ist bevorzugt ausgebildet, den Sicherungszustand von innerhalb eines vorgegebenen Zeitraums gemeldeten identifizierten mobile Ausrüstungsvorrichtungen als sicher zu bewerten, und den Sicherungszustand von innerhalb des vorgegebenen Zeitraums nicht detektierten bzw. gemeldeten, der Zentraleinheit aber auf Grundlage ihrer individuellen Identifizierungsinformationen bekannten mobilen Ausrüstungsvorrichtungen als unsicher zu bewerten. Dadurch kann für jede der überwachten mobilen Ausrüstungsvorrichtungen individuell der aktuelle Sicherungszustand ermittelt bzw. bewertet werden. Somit bietet das Überwachungssystem eine erhöhte Flexibilität und Bewertungsgenauigkeit. In Kombination mit der oben erwähnten Weiterbildung mit einer Übermittlung der Benutzerinformation, die einen aktuellen Benutzer der mobilen Sensorvorrichtung identifiziert, kann die Zentralsteuereinheit auf Grundlage der in der Vergangenheit empfangenen Benutzerinformationen und Identifizierungsinformationen ermitteln, welcher Benutzer eine aktuell nicht mehr detektierbare mobile Ausrüstungsvorrichtung zuletzt benutzt hatte. Durch eine Nachfrage bei dem letzten Benutzer der identifizierten Ausrüstungsvorrichtung über deren letzten bekannten Aufenthaltsort kann die aktuell nicht detektierbare Ausrüstungsvorrichtung schnell wiedergefunden und gesichert werden. Das vorgestellte Überwachungssystem erleichtert und beschleunigt somit das Auffinden aktuell nicht detektierbarer, und somit als unsicher bzw. ungesichert eingestufter mobiler Ausrüstungsvorrichtungen.

Außerdem ist in einer Weiterbildung des vorgestellten Überwachungssystems vorgesehen, dass die mindestens eine mobile Sensorvorrichtung ausgebildet ist zum Detektieren einer Mehrzahl von sich gleichzeitig innerhalb der vorgegebenen Entfernung zu der mobilen Sensorvorrichtung befindenden mobilen Ausrüstungsvorrichtungen und zum Melden der Mehrzahl an die Zentraleinheit. Dies stellt sicher, dass auch bei einer Anhäufung von mehreren mobilen Ausrüstungsvorrichtungen in der Nähe einer einzigen mobilen Sensorvorrichtung, jede mobile Ausrüstungsvorrichtung durch das vorgestellte Überwachungssystem überwacht werden kann.

In einer Weiterbildung des vorgestellten Überwachungssystems ist vorgesehen, dass die Zentraleinheit ausgebildet ist zum Ermitteln der aktuellen Positionen der mobilen Ausrüstungsvorrichtungen in dem Luftfahrzeug. In einer technisch einfach zu realisierenden Ausgestaltung des Überwachungssystems ermittelt die Zentraleinheit nur die aktuellen Positionen von durch die stationären Sensorvorrichtungen aktuell detektierten mobilen Ausrüstungsvorrichtungen unter Berücksichtung und Kenntnis der festen Positionen der stationären Sensorvorrichtungen in dem Luftfahrzeug. Die Ortungsfähigkeiten des vorgestellten Überwachungssystems können durch die unten aufgeführten Weiterbildungen verbessert werden.

In einer Weiterbildung des vorgestellten Überwachungssystems ist vorgesehen, dass die mindestens eine stationäre Sensorvorrichtung ausgebildet ist zum Detektieren eines aktuellen Abstands zwischen der stationären Sensorvorrichtung und der mobilen Ausrüstungsvorrichtung innerhalb des vorgegebenen Umgebungsbereichs der stationären Sensorvorrichtung und zum Melden des detektierten Abstands an die Zentraleinheit. Die stationäre Sensorvorrichtung kann den aktuellen Abstand beispielsweise durch Auswertung einer Empfangsstärke eines von der stationären Sensorvorrichtung und/oder der mobilen Ausrüstungsvorrichtung ausgestrahlten Erfassungssignals detektieren bzw. messen. Die Zentraleinheit ist bevorzugt ausgebildet zum Ermitteln der aktuellen Positionen der überwachten mobilen Ausrüstungsvorrichtungen auf Grundlage der von den stationären Sensorvorrichtungen gemeldeten aktuellen Abstände. Die stationären Sensorvorrichtungen können so angeordnet sein, dass sie jeweilige Erfassungstore bzw. Erfassungsschleusen ausbilden. Bevorzugt sind die stationären Sensorvorrichtungen so angeordnet, dass mindestens zwei stationäre Sensorvorrichtungen gleichzeitig ihren Abstand zu einer selben mobilen Ausrüstungsvorrichtung messen können. Eine geeignete Anordnung der stationären Sensorvorrichtungen als Erfassungstore und/oder mit überlappenden Abstandsmessungsbereichen ermöglicht, dass die Zentraleinheit als Ortungssystem zum Lokalisieren von mobilen Ausrüstungsvorrichtungen in dem Gesamterfassungsbereich der stationären Sensorvorrichtungen ausgebildet ist. In Kombination mit der oben erwähnten Weiterbildung mit einer Übermittlung der Identifizierungsinformationen können die aktuellen Positionen individuell für durch die stationären Sensorvorrichtungen detektierbare mobile Ausrüstungsvorrichtungen in der Zentraleinheit berechnet und verfolgt werden.

In einer Weiterbildung des vorgestellten Überwachungssystems ist vorgesehen, dass die mindestens eine mobile Sensorvorrichtung ausgebildet ist zum Übermitteln ihrer aktuellen Position in dem Luftfahrzeug an die Zentraleinheit. Beim Detektieren der Anwesenheit der mobilen Ausrüstungsvorrichtung innerhalb der vorgegebenen Entfernung übermittelt bevorzugt die mobile Sensorvorrichtung ihre aktuelle Position, besonders bevorzugt zusammen mit der oben erwähnten Identifizierungsinformation der detektierten mobilen Ausrüstungsvorrichtung, an die Zentraleinheit. Somit kann die Zentraleinheit die Positionen der mobilen Sensorvorrichtungen und der mobilen Ausrüstungsvorrichtungen ermitteln und überwachen. In Kombination der oben erwähnten Weiterbildungen mit der Abstandsmessung durch die stationären Sensorvorrichtungen und der Übermittlung der Identifizierungsinformation wird zusammen mit der Übermittlung der aktuellen Positionen der mobilen Sensorvorrichtungen an die Zentraleinheit ein Überwachungssystem mit sehr ausgeprägten Ortungsfähigkeiten realisiert.

In einer Weiterbildung des vorgestellten Überwachungssystems ist vorgesehen, dass die mobilen Ausrüstungsvorrichtungen ausgebildet sind zum Melden ihrer jeweiligen aktuellen Position an die Zentraleinheit. Somit kann die Zentraleinheit die überwachten mobilen Ausrüstungsvorrichtungen präzise orten. Eine jeweilige mobile Ausrüstungsvorrichtung kann ausgebildet sein zum eigenständigen Übermitteln ihrer aktuellen Position in dem Luftfahrzeug an die Zentraleinheit. Alternativ oder optional kann vorgesehen sein, dass eine jeweilige mobile Ausrüstungsvorrichtung zum Übermitteln ihrer aktuellen Position die Funkkommunikationsmittel einer mobilen Sensorvorrichtung nutzt, wenn die mobile Sensorvorrichtung diese mobile Ausrüstungsvorrichtung detektiert und dieses an die Zentraleinheit meldet.

Außerdem wird als eine Lösung der Aufgabe der Erfindung ein Verfahren vorgestellt zum Überwachen von in einem Luftfahrzeug angeordneten mobilen Ausrüstungsvorrichtungen, insbesondere Rollcontainern für eine Bordküche des Luftfahrzeugs, mittels des oben vorgestellten Überwachungssystems oder einer seiner Weiterbildungen und Fortbildungen. Bei dem vorgestellten Verfahren detektiert mindestens eine in dem Luftfahrzeug stationäre Sensorvorrichtung eine der mobilen Ausrüstungsvorrichtungen. Eine Zentraleinheit in dem Luftfahrzeug ermittelt einen aktuellen Sicherungszustand der mobilen Ausrüstungsvorrichtungen auf Grundlage von Detektierergebnissen der mindestens einen stationären Sensorvorrichtung. Außerdem detektiert mindestens eine in dem Luftfahrzeug mobile Sensorvorrichtung eine relativ zu der mobilen Sensorvorrichtung bewegliche Ausrüstungsvorrichtung der mobilen Ausrüstungsvorrichtungen, die sich innerhalb einer vorgegebenen Entfernung zu der mindestens einen mobilen Sensorvorrichtung befindet, und meldet ein jeweiliges Detektierergebnis an die Zentraleinheit. Die Zentraleinheit bewertet bzw. beurteilt den aktuellen Sicherungszustand der mobilen Ausrüstungsvorrichtungen mit Berücksichtigung der Detektierergebnisse der mindestens einen mobilen Sensorvorrichtung. Die für das oben vorgestellte Überwachungssystem und dessen Weiterbildungen und Fortbildungen vorgestellten Merkmale können in Weiterbildungen des vorgestellten Verfahrens aufgenommen sein.

### Kurze Beschreibung der Zeichnungen

Zur Verdeutlichung des vorgeschlagenen Überwachungssystems und des Überwachungsverfahrens werden nun Ausführungsbeispiele mit Verweis auf die folgenden Figuren vorgestellt.
- Fig. 1: veranschaulicht ein Ausführungsbeispiel des vorgestellten Überwachungssystems mit Detektierergebnissen der Sensorvorrichtungen für unterschiedliche Szenarien.
- Fig. 2: veranschaulicht ein Ausführungsbeispiel des vorgestellten Überwachungssystems mit einer Ortung von mobilen Ausrüstungsvorrichtungen durch stationäre Sensorvorrichtungen.

In den Figuren sind identische oder ähnliche Komponenten figurenübergreifend mit denselben Bezugszeichen versehen.

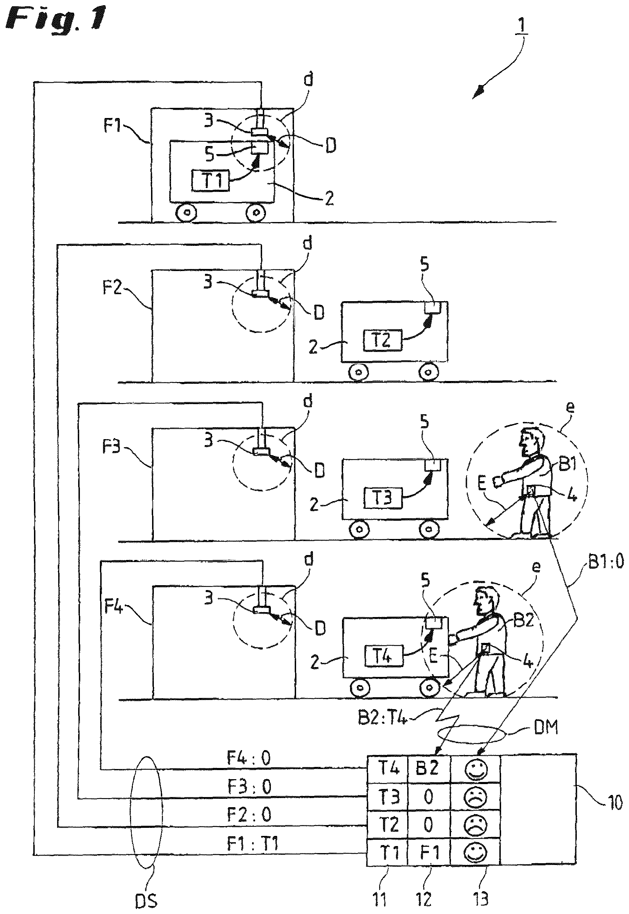

Fig. 1 veranschaulicht ein Ausführungsbeispiel des vorgestellten Überwachungssystems mit Detektierergebnissen der Sensorvorrichtungen für unterschiedliche Szenarien. Das in einem Flugzeug angeordnete Überwachungssystem 1 weist eine Zentraleinheit 10, vier stationäre Sensorvorrichtungen 3 sowie zwei mobile Sensorvorrichtungen 4 auf. In einer Bordküche des Flugzeugs sind vier Staufächer F1, F2, F3 und F4 zur Aufnahme von jeweils einer mobilen Ausrüstungsvorrichtung 2 vorgesehen. Die Staufächer F1 bis F4 sind jeweils mit einer der stationären Sensorvorrichtungen 3 ausgerüstet. Jede der mobilen Ausrüstungsvorrichtungen 2 ist als ein durch einen Benutzer bewegbarer Rollcontainer für die Bordküche ausgestaltet und ist mit einer Signaleinrichtung 5 versehen, in der eine eindeutige Identifizierungsinformation T1, T2, T3 bzw. T4 dauerhaft gespeichert ist. Die Zentraleinheit 10 ist zum Überwachen dieser vier mobilen Ausrüstungsvorrichtungen T1 bis T4 konfiguriert, deren Identifizierungsinformationen in einem Speicherabschnitt 11 der Zentraleinheit 10 gespeichert sind. Eine mobile Ausrüstungsvorrichtung 2 wird nur dann durch eine der Sensorvorrichtungen 3 bzw. 4 detektiert, wenn die Signaleinrichtung 5 dieser mobilen Ausrüstungsvorrichtung 2 durch eine Sensorvorrichtung 3 bzw. 4 detektiert wird. Jede der stationären Sensorvorrichtungen 3 ist ausgebildet zum Detektieren einer mobilen Ausrüstungsvorrichtung 2, wenn sich diese (konkreter: deren Signaleinrichtung 5) innerhalb eines vorgegebenen Umgebungsbereichs d der stationären Sensorvorrichtung 3 bzw. innerhalb einer vorgegebenen Entfernung D zu der stationären Sensorvorrichtung 3 befindet. Die zwei mobilen Sensorvorrichtungen 4 sind jeweils ausgebildet zum Detektieren einer mobilen Ausrüstungsvorrichtung 2, wenn sich diese (konkreter: deren Signaleinrichtung 5) innerhalb eines vorgegebenen Umgebungsbereichs e bzw. innerhalb einer vorgegebenen Entfernung E zu der mobilen Sensorvorrichtung 4 befindet. In dem in Fig. 1 veranschaulichten Gesamtszenario werden die mobilen Sensorvorrichtungen 4 von einem Benutzer B1 bzw. B2 getragen. Jede der mobilen Sensorvorrichtungen 4 speichert eine abrufbare Benutzerinformation, die den Benutzer als Benutzer B1 bzw. B2 spezifiziert.

Die Signaleinrichtungen 5 der mobilen Ausrüstungsvorrichtungen T1 bis T4 sind als RFID-Transponder ausgestattet, die in Reaktion auf ein von einer stationären Sensorvorrichtung 3 oder einer mobilen Sensorvorrichtung 4 ausgesendetes Funksignal eine Antwortfunksignal mit ihrer Identifizierungsinformation an die anfragende Sensorvorrichtung übertragen. In einem anderen Ausführungsbeispiel sind die Signaleinrichtungen 5 als zweidimensionale optische Codes, beispielsweise als QR-Codes, ausgestaltet und werden optisch durch eine jeweilige stationäre oder mobile Sensorvorrichtung 3 bzw. 4 gelesen.

Wie in Fig. 1 veranschaulicht, befindet sich nur in dem Staufach F1 eine mobile Ausrüstungsvorrichtung 2. Die Signaleinrichtung 5 der mobilen Ausrüstungsvorrichtung 2 befindet sich innerhalb des vorgegebenen Umgebungsbereichs d bzw. innerhalb der vorgegebenen Entfernung D, so dass die dem Staufach F1 zugeordnete stationäre Sensorvorrichtung 3 die mobile Ausrüstungsvorrichtung T1 detektiert. Zugleich identifiziert diese stationäre Sensorvorrichtung 3 diese mobile Ausrüstungsvorrichtung 2 durch Abruf der Identifizierungsinformation als T1. Folglich meldet die dem Staufach F1 zugeordnete bzw. in diesem montierte stationäre Sensorvorrichtung 3 an die Zentraleinheit 10 per Meldung "F1:T1" als Detektierergebnis DS, dass sich in dem Staufach F1 die mobile Ausrüstungsvorrichtung T1 befindet. Die anderen drei stationären Sensorvorrichtungen 3 der Staufächer F2 bis F4 detektieren hingegen keine mobile Ausrüstungsvorrichtung 2 in ihrem jeweiligen vorgegebenen Umgebungsbereich d, da die Staufächer F2 bis F4 leer sind. Folglich melden diese drei stationären Sensorvorrichtungen 3 der Staufächer F2, F3 und F4 als Detektierergebnis DS "F2:0", "F3:0" bzw. "F4:0" an die Zentraleinheit 10. Ein konventionelles, zu dem vorgestellten Überwachungssystem unterschiedliches Überwachungssystem würde basierend auf den Detektierergebnissen DS nur die in dem Staufach F1 aufgenommene mobile Ausrüstungsvorrichtung T1 als sicher bzw. gesichert bewerten.

Wie in Fig. 1 veranschaulicht, befindet sich innerhalb des Umgebungsbereichs e bzw. innerhalb der vorgegebenen Entfernung E der mobilen Sensorvorrichtung 4 des Benutzers B1 keine mobile Ausrüstungsvorrichtung 2 (konkreter: deren Signaleinrichtung 5). Da diese mobile Sensorvorrichtung 4 des Benutzers B1 keine mobile Ausrüstungsvorrichtung 2 detektiert, meldet sie zusammen mit ihrer Benutzerinformation B1 als Detektierergebnis DM "B1:0". Die mobile Sensorvorrichtung 4 des Benutzers B2 detektiert die mobile Ausrüstungsvorrichtung T4, da sich deren Signaleinrichtung 5 innerhalb des vorgegebenen Umgebungsbereichs e bzw. innerhalb der vorgegebenen Entfernung E der mobilen Sensorvorrichtung 4 befindet, und identifiziert diese basierend auf der in der Signaleinrichtung 5 gespeicherten Identifizierungsinformation als T4. Daher sendet die mobile Sensorvorrichtung 4 des Benutzers B2 als das Detektierergebnis DM die Meldung "B2:T4".

Die Zentraleinheit 10 bewertet nach dem Empfang der vier Detektierergebnisse DS und DM von den stationären bzw. mobilen Sensorvorrichtungen den aktuellen Sicherungszustand der überwachten mobilen Ausrüstungsvorrichtungen T1 bis T4. Zum Durchführen der Bewertung ordnet die Zentraleinheit 10 die Detektierergebnisse den im Speicherabschnitt 11 der Zentraleinheit 10 gespeicherten Identifizierungsinformationen T1 bis T4 zu und speichert die Zuordnung in einem Speicherabschnitt 12 der Zentraleinheit 10 und die Bewertung in einem Speicherabschnitt 13 der Zentraleinheit 10. Bei dieser Bewertung berücksichtigt die Zentraleinheit 10 die Detektierergebnisse DM der mobilen Sensorvorrichtungen 4 insofern vorrangig oder zumindest gleichwertig gegenüber den Detektierergebnissen DS der die Staufächer überwachenden stationären Sensorvorrichtungen 3, als dass die Zentralsteuereinheit 10 nur den Sicherungszustand der mobilen Ausrüstungsvorrichtungen T2 und T3 als unsicher bewertet, denen überhaupt keine sie detektierende Sensorvorrichtung zugeordnet worden ist, aber den Sicherungszustand der durch die mobile Sensorvorrichtung 4 detektierten mobilen Ausrüstungsvorrichtung T4 wie auch den Sicherungszustand der in dem Staufach F1 aufgenommenen mobilen Ausrüstungsvorrichtung T1 als sicher bewertet. Bei der konventionellen Lösung, die von diesem Ausführungsbeispiel bezüglich der Flexibilität für die Benutzer und der Bewertungsgenauigkeit übertroffen wird, würde hingegen nur der Sicherungszustand der in dem Staufach F1 aufgenommenen mobilen Ausrüstungsvorrichtung T1 als sicher bewertet werden.

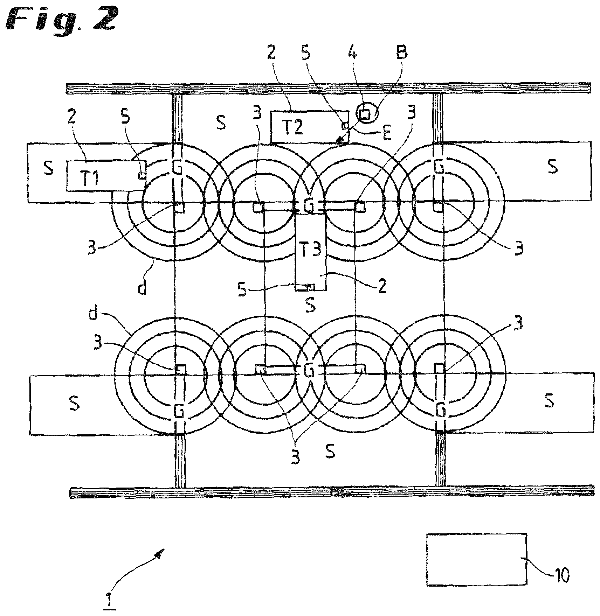

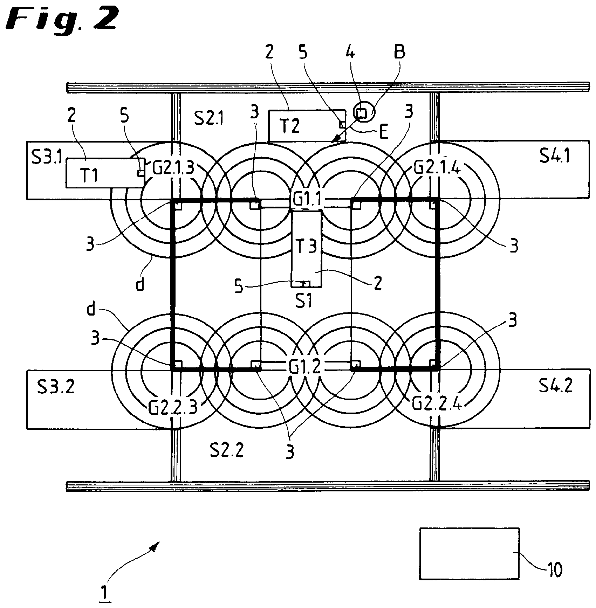

In Fig. 2 ist ein Ausführungsbeispiel des vorgestellten Überwachungssystems mit einer Ortung von mobilen Ausrüstungsvorrichtungen durch stationäre Sensorvorrichtungen veranschaulicht. Die stationären Sensorvorrichtungen 3 des in Fig. 2 veranschaulichten Überwachungssystems 1 sind so angeordnet, dass sie in einen jeweiligen Durchgang von einem Raumabschnitt Sx zu einem anderen Raumabschnitt Sy des Luftfahrzeugs ein Tor bzw. eine Schleuse zum Detektieren einer dieses Tor bzw. diese Schleuse durchquerenden mobilen Ausrüstungsvorrichtung 2 ausbilden. In dem Beispiel von Fig. 2 ist der Zentraleinheit 10 bekannt, dass anfangs alle veranschaulichten mobilen Ausrüstungsvorrichtungen T1, T2 und T3 sich im Abschnitt S1 befinden. Die Zentraleinheit 10 kann mittels aktueller Detektierergebnisse der stationären Sensorvorrichtungen 3 und mittels gespeicherter Detektierergebnisse der stationären Sensorvorrichtungen 3 aus der Vergangenheit eine Bewegung einer jeweiligen mobilen Ausrüstungsinformation 2 verfolgen und somit auch den Abschnitt Sz ermitteln, in dem sich die mobile Ausrüstungsinformation 2 aktuell befindet. Beispielsweise kann die Zentraleinheit 10 auf Grundlage von gespeicherten Detektierergebnissen, die anzeigen, dass die mobile Ausrüstungsvorrichtung T1 von S1 startend zunächst das Tor G1.1 und anschließend das Tor G2.1.3 passiert hat, ermitteln, dass sich T1 im Abschnitt S3.1 befindet. Ähnlich kann die Zentraleinheit 10 ermitteln, dass die mobile Ausrüstungsvorrichtung T2 von S1 startend in den Abschnitt S2.1 bewegt worden ist, wenn nur Detektierergebnisse von Tor G1.1 gespeichert sind. Da die gespeicherten Detektierergebnisse der stationären Sensorvorrichtungen 3 anzeigen, dass die mobile Ausrüstungsvorrichtung T3 noch gar kein Tor passiert hat, ermittelt die Zentraleinheit 10 den ursprünglichen Abschnitt S1 als den derzeitigen Aufenthaltsbereich von T3. Diese Ortung der mobilen Ausrüstungsvorrichtungen 2 kann durch die Detektierergebnisse der von einem Benutzer B getragenen mobilen Sensorvorrichtung 4 unterstützt bzw. verfeinert werden.

### Bezugszeichenliste

- 1: Überwachungssystem
- 2: mobile Ausrüstungsvorrichtung
- 3: stationäre Sensorvorrichtung
- 4: mobile Sensorvorrichtung
- 5: Signaleinrichtung
- 10: Zentraleinheit
- 11: Speicherabschnitt mit Identifizierungsinformation
- 12: Speicherabschnitt für Zuordnungen
- 13: Speicherabschnitt für Bewertungen
- B1, B2: Benutzer(informationen)
- d, D: Umgebungsbereich / Entfernung der stationären Sensorvorrichtung
- DM: Detektierergebnisse der mobilen Sensorvorrichtungen
- DS: Detektierergebnisse der stationären Sensorvorrichtungen
- e, E: Umgebungsbereich bzw. Entfernung der mobilen Sensorvorrichtung
- F1-F4:: Staufächer
- G:: Tor bzw. Schleuse
- S:: Raumabschnitt
- T1-T4:: Identifizierungsinformationen

## Patentansprüche

1. Überwachungssystem (1) für ein Luftfahrzeug zum Überwachen von in dem Luftfahrzeug mobilen Ausrüstungsvorrichtungen (2), insbesondere Rollcontainern für eine Bordküche des Luftfahrzeugs, mit mindestens einer stationären Sensorvorrichtung (3) zum Detektieren einer der mobilen Ausrüstungsvorrichtungen (2) und mit ferner einer Zentraleinheit (10) zum Bewerten eines aktuellen Sicherungszustands der mobilen Ausrüstungsvorrichtungen (2) auf Grundlage von an die Zentraleinheit (10) gemeldeten Detektierergebnissen (DS) der mindestens einen stationären Sensorvorrichtung (3), **dadurch gekennzeichnet, dass** das Überwachungssystem (1) ferner mindestens eine mobile Sensorvorrichtung (4) zum Detektieren einer relativ zu der mobilen Sensorvorrichtung (4) beweglichen Ausrüstungsvorrichtung (2) der mobilen Ausrüstungsvorrichtungen innerhalb einer vorgegebenen Entfernung (E) und zum Melden eines jeweiligen Detektierergebnisses (DM) an die Zentraleinheit (10) umfasst, und
dass die Zentraleinheit (10) ausgebildet ist zum Bewerten des aktuellen Sicherungszustands der mobilen Ausrüstungsvorrichtungen (2) mit Berücksichtigung der Detektierergebnisse (DM) der mindestens einen mobilen Sensorvorrichtung (4),
wobei der aktuelle Sicherungszustand der mobilen Ausrüstungsvorrichtungen (2) entweder ein sicherer Zustand oder ein unsicherer Zustand ist, und
wobei sich die mobilen Ausrüstungsvorrichtungen (2) in einem sicheren Zustand befinden, wenn sich die mobilen Ausrüstungsvorrichtungen (2) innerhalb einer vorgegebenen Entfernung mindestens einer stationären Sensorvorrichtung (3) oder mindestens einer mobilen Sensorvorrichtung (4) befinden.

2. Überwachungssystem (1) nach Anspruch 1, **dadurch gekennzeichnet, dass**
die mindestens eine mobile Sensorvorrichtung (4) jeweils als eine von einer Bordkabinenperson des Luftfahrzeugs tragbare Vorrichtung ausgebildet ist.

3. Überwachungssystem (1) nach Anspruch 1 oder 2, **dadurch gekennzeichnet, dass** die mindestens eine stationäre Sensorvorrichtung (3) einem jeweiligen Staufach (F1-F4), insbesondere einer Bordküche, des Luftfahrzeugs zugeordnet ist und ausgebildet ist zum Detektieren und Melden an die Zentraleinheit (10), ob oder ob nicht eine der mobilen Ausrüstungsvorrichtungen (2) in dem Staufach (F1-F4) aufgenommen ist.

4. Überwachungssystem (1) nach einem der Ansprüche 1 bis 3, **dadurch gekennzeichnet, dass** die Zentraleinheit (10) ausgebildet ist zum Bewerten, dass sich eine aktuell von der mobilen Sensorvorrichtung (4) detektierbare mobile Ausrüstungsvorrichtung (2) nicht in einem unsicheren Sicherungszustand befindet.

5. Überwachungssystem (1) nach einem der Ansprüche 1 bis 4, **dadurch gekennzeichnet, dass** die mindestens eine mobile Sensorvorrichtung (4) ausgebildet ist zum Übermitteln einer einem aktuellen Benutzer der mobilen Sensorvorrichtung (4) zugeordneten Benutzerinformation (B1, B2) an die Zentraleinheit (10), wenn die mobile Sensorvorrichtung (4) eine mobile Ausrüstungsvorrichtung (2) innerhalb der vorgegebenen Entfernung (E) detektiert.

6. Überwachungssystem (1) nach einem der Ansprüche 1 bis 5, **dadurch gekennzeichnet, dass** eine jeweilige mobile Sensorvorrichtung (4) einem individuellen Benutzer fest zugeordnet ist und ausgebildet ist zum Melden des Benutzers an die Zentraleinheit (10).

7. Überwachungssystem (19 nach einem der Ansprüche 1 bis 6, **dadurch gekennzeichnet, dass** die mindestens eine mobile Sensorvorrichtung (4) ein Bestandteil einer Kleidung eines Benutzers ist.

8. Überwachungssystem (1) nach einem der Ansprüche 1 bis 7, **dadurch gekennzeichnet, dass** die mindestens eine stationäre Sensorvorrichtung (3) ausgebildet ist zum Identifizieren einer von ihr detektierten mobilen Ausrüstungsvorrichtung (2) und zum Melden einer die identifizierte Ausrüstungsvorrichtung spezifizierenden Identifizierungsinformation (T1-T4) an die Zentraleinheit (10).

9. Überwachungssystem (1) nach einem der Ansprüche 1 bis 8, **dadurch gekennzeichnet, dass** die mindestens eine mobile Sensorvorrichtung (4) ausgebildet ist zum Identifizieren einer von ihr detektierten mobilen Ausrüstungsvorrichtung (2) und zum Melden einer die identifizierte Ausrüstungsvorrichtung spezifizierenden Identifizierungsinformation (T1-T4) an die Zentraleinheit (10).

10. Überwachungssystem (1) nach einem der Ansprüche 1 bis 9, **dadurch gekennzeichnet, dass** die mindestens eine mobile Sensorvorrichtung (4) ausgebildet ist zum Detektieren einer Mehrzahl von sich gleichzeitig innerhalb der vorgegebenen Entfernung (E) zu der mobilen Sensorvorrichtung (4) befindenden mobilen Ausrüstungsvorrichtungen (2) und zum Melden der Mehrzahl an die Zentraleinheit (10).

11. Überwachungssystem (1) nach einem der Ansprüche 1 bis 10, **dadurch gekennzeichnet, dass** die Zentraleinheit (10) ausgebildet ist zum Ermitteln der aktuellen Positionen der mobilen Ausrüstungsvorrichtungen (2) in dem Luftfahrzeug.

12. Überwachungssystem (1) nach einem der Ansprüche 1 bis 1 1, **dadurch gekennzeichnet, dass** die mindestens eine stationäre Sensorvorrichtung (3) ausgebildet ist zum Detektieren eines aktuellen Abstands zwischen der stationären Sensorvorrichtung (3) und der mobilen Ausrüstungsvorrichtung (2) innerhalb eines vorgegebenen Umgebungsbereich (d) und zum Melden des detektierten Abstands an die Zentraleinheit (10).

13. Überwachungssystem (1) nach einem der Ansprüche 1 bis 11, **dadurch gekennzeichnet, dass** die mindestens eine mobile Sensorvorrichtung (4) ausgebildet ist zum Übermitteln ihrer aktuellen Position in dem Luftfahrzeug an die Zentraleinheit (10).

14. Überwachungssystem (1) nach einem der Ansprüche 1 bis 13, **dadurch gekennzeichnet, dass** die mobilen Ausrüstungsvorrichtungen (2) ausgebildet sind zum Melden ihrer jeweiligen aktuellen Position an die Zentraleinheit (10).

15. Verfahren zum Überwachen von in einem Luftfahrzeug angeordneten mobilen Ausrüstungsvorrichtungen (2), insbesondere Rollcontainern für eine Bordküche des Luftfahrzeugs, mittels eines Überwachungssystems (1) nach einem der Ansprüche 1 bis 14, wobei mindestens eine in dem Luftfahrzeug stationäre Sensorvorrichtung (3) eine der mobilen Ausrüstungsvorrichtungen (2) detektiert, und eine Zentraleinheit (10) in dem Luftfahrzeug einen aktuellen Sicherungszustand der mobilen Ausrüstungsvorrichtungen (2) auf Grundlage von Detektierergebnissen (DS) der mindestens einen stationären Sensorvorrichtung (3) ermittelt, **dadurch gekennzeichnet, dass** ferner mindestens eine in dem Luftfahrzeug mobile Sensorvorrichtung (4) eine relativ zu der mobilen Sensorvorrichtung (4) bewegliche beliebige Ausrüstungsvorrichtung (2) der mobilen Ausrüstungsvorrichtungen innerhalb einer vorgegebenen Entfernung (E) detektiert und ein jeweiliges Detektierergebnis (DM) an die Zentraleinheit (10) meldet, und dass die Zentraleinheit (10) den aktuellen Sicherungszustand der mobilen Ausrüstungsvorrichtungen (2) mit Berücksichtigung der Detektierergebnisse (DM) der mindestens einen mobilen Sensorvorrichtung (4) bewertet,
wobei der aktuelle Sicherungszustand der mobilen Ausrüstungsvorrichtungen (2) entweder ein sicherer Zustand oder ein unsicherer Zustand ist, und
wobei sich die mobilen Ausrüstungsvorrichtungen (2) in einem sicheren Zustand befinden, wenn sich die mobilen Ausrüstungsvorrichtungen (2) innerhalb einer vorgegebenen Entfernung mindestens einer stationären Sensorvorrichtung (3) oder mindestens einer mobilen Sensorvorrichtung (4) befinden.

## Claims

1. A monitoring systems (1) for an aircraft for the monitoring of mobile equipment devices (2) in the aircraft, in particular roll containers for a galley of the aircraft, with at least one stationary sensor device (3) for the detection of one of the mobile equipment devices (2) and with, furthermore, a central unit (10) for the evaluation of a current security state of the mobile equipment devices (2) on the basis of detection results (DS) of the at least one stationary sensor device (3), which are reported to the central unit (10), **characterised in that**, the monitoring system (1) further comprises at least one mobile sensor device (4) for the detection of an equipment device (2), which is movable relative to the mobile sensor device (4) of the mobile equipment devices within a predetermined distance (E), and for reporting a respective detection result (DM) to the central unit (10), and **in that**, the central unit (10) is designed to evaluate the current security state of the mobile equipment devices (2), taking into account the detection results (DM) of the at least one mobile sensor device (4), with the detection results (DM) of the at least one mobile sensor device (4) being reported to the central unit (10), wherein
the current security state of the mobile equipment devices (2) is either a secure state or an insecure state, and wherein
the mobile equipment devices (2) are in a secure state if the mobile equipment devices (2) are within a predetermined distance of at least one stationary sensor device (3) or at least one mobile sensor device (4) .

2. The monitoring system (1) according to Claim 1, **characterised in that**, the at least one mobile sensor device (4) is in each case designed as a device that can be carried by an aircraft cabin crew member.

3. The monitoring system (1) according to Claim 1 or 2, **characterised in that**, the at least one stationary sensor device (3) is assigned to a respective stowage compartment (F1-F4), in particular a galley, which is assigned to the aircraft, and is designed to detect and report to the central unit (10) whether or not one of the mobile equipment devices (2) is accommodated in the stowage compartment (F1-F4).

4. The monitoring system (1) according to one of the Claims 1 to 3, **characterised in that**, the central processing unit (10) is designed to assess that a mobile equipment device (2) currently detectable by the mobile sensor device (4) is not in an insecure security state.

5. The monitoring system (1) according to one of the Claims 1 to 4, **characterised in that**, the at least one mobile sensor device (4) is designed to transmit an item of user information (B1, B2), assigned to a current user of the mobile sensor device (4), to the central unit (10), if the mobile sensor device (4) detects a mobile equipment device (2) within the predetermined distance (E) .

6. The monitoring system (1) according to one of the Claims 1 to 5, **characterised in that**, a respective mobile sensor device (4) is permanently assigned to an individual user and is designed to report the user to the central unit (10).

7. The monitoring system (1) according to one of the Claims 1 to 6, **characterised in that**, the at least one mobile sensor device (4) is a component of a user's clothing.

8. The monitoring system (1) according to one of the Claims 1 to 7, **characterised in that**, the at least one stationary sensor device (3) is designed to identify a mobile equipment device (2) that it has detected, and to report identification information (T1-T4) specifying the identified equipment device to the central processing unit (10).

9. The monitoring system (1) according to one of the Claims 1 to 8, **characterised in that**, the at least one mobile sensor device (4) is designed to identify a mobile equipment device (2) that it has detected, and to report an item of identification information (T1-T4) specifying the identified equipment device to the central unit (10).

10. The monitoring system (]) according to one of the Claims 1 to 9, **characterised in that**, the at least one mobile sensor device (4) is designed to detect a plurality of mobile equipment devices (2) simultaneously located within the predetermined distance (E) from the mobile sensor device (4), and to report the plurality to the central unit (10).

11. The monitoring system (1) according to one of the Claims 1 to 10, **characterised in that**, the central processing unit (10) is designed to determine the current positions of the mobile equipment devices (2) in the aircraft.

12. The monitoring system (1) according to one of the Claims 1 to 11, **characterised in that**, the at least one stationary sensor device (3) is designed to detect a current distance between the stationary sensor device (3) and the mobile equipment device (2) within a predetermined ambient range (d), and to report the detected distance to the central unit (10).

13. The monitoring system (1) according to one of the Claims 1 to 11, **characterised in that**, the at least one mobile sensor device (4) is designed to transmit its current position in the aircraft to the central unit (10).

14. The monitoring system (1) according to one of the Claims 1 to 13, **characterised in that**, the mobile equipment devices (2) are designed to report their respective current positions to the central unit (10).

15. A method for the monitoring of mobile equipment devices (2) arranged in an aircraft, in particular roll containers for a galley of the aircraft, by means of a monitoring system (1) according to one of the Claims 1 to 14, wherein at least one sensor device (3) stationary in the aircraft detects one of the mobile equipment devices (2), and a central unit (10) in the aircraft determines a current security status of the mobile equipment devices (2) based on detection results (DS) of the at least one stationary sensor device (3), **characterised in that**, furthermore at least one sensor device (4) mobile in the aircraft detects any equipment device (2) of the mobile equipment devices movable relative to the mobile sensor device (4) within a predetermined distance (E), and reports a respective detection result (DM) to the central unit (10), and **in that**, the central unit (10) evaluates the current security state of the mobile equipment devices (2), taking into account the detection results (DM) of the at least one mobile sensor device (4), wherein
the current security state of the mobile equipment devices (2) is either a secure state or an insecure state, and wherein
the mobile equipment devices (2) are in a secure state if the mobile retrieval devices (2) are within a predetermined distance of at least one stationary sensor device (3) or at least one mobile sensor device (4) .

## Revendications

1. Système de surveillance (1) pour un aéronef pour la surveillance de dispositifs d'équipement mobiles (2) dans l'aéronef, en particulier de conteneurs roulants pour une cuisine de bord de l'aéronef, avec au moins un dispositif de détection fixe (3) pour détecter un des dispositifs d'équipement mobiles (2) et avec en plus une unité centrale (10) pour évaluer un état de sécurisation réel des dispositifs d'équipement mobiles (2) sur la base de résultats de détection (DS) notifiés à l'unité centrale (10) d'au moins un dispositif de détection fixe (3), **caractérisé en ce que** le système de surveillance (1) comprend en plus au moins un dispositif de détection mobile (4) pour la détection d'un dispositif d'équipement mobile (2) par rapport au dispositif de détection mobile (4) des dispositifs d'équipement mobiles à l'intérieur d'une distance prédéfinie (E) et pour la notification d'un résultat de détection respectif (DM) à l'unité centrale (10) et **en ce que** l'unité centrale (10) est constituée pour évaluer l'état de sécurisation réel des dispositifs d'équipement mobiles (2) en tenant compte des résultats de détection (DM) d'au moins un dispositif de détection mobile (4),
sachant que l'état de sécurisation réel des dispositifs d'équipement mobiles (2) est soit un état sécurisé, soit un état non sécurisé, et
sachant que les dispositifs d'équipement mobiles (2) se trouvent dans un état sécurisé, lorsque les dispositifs d'équipement mobiles (2) se trouvent à l'intérieur d'une distance prédéfinie d'au moins un dispositif de détection fixe (3) ou d'au moins un dispositif de détection mobile (4).

2. Système de surveillance (1) selon la revendication 1, **caractérisé en ce qu'**au moins un dispositif de détection mobile (4) est respectivement constitué sous la forme d'un dispositif portable par un personnel de cabine de l'aéronef.

3. Système de surveillance (1) selon la revendication 1 ou 2, **caractérisé en ce qu**'au moins un dispositif de détection fixe (3) est attribué à un compartiment de rangement respectif (F1 - F4) en particulier à une cuisine de bord, de l'aéronef et est constitué pour détecter et notifier à l'unité centrale (10), si un des dispositifs d'équipement mobiles (2) est ou n'est pas logé dans le compartiment de rangement (F1 - F4).

4. Système de surveillance (1) selon l'une quelconque des revendications 1 à 3, **caractérisé en ce que** l'unité centrale (10) est constituée pour évaluer qu'un dispositif d'équipement mobile (2) détectable réellement par le dispositif de détection mobile (4) ne se trouve pas dans un état de sécurisation non sécurisé.

5. Système de surveillance (1) selon l'une quelconque des revendications 1 à 4, **caractérisé en ce qu'**au moins un dispositif de détection mobile (4) est constitué pour transmettre une information d'utilisateur (B1, B2) attribuée à un utilisateur réel du dispositif de détection mobile (4) à l'unité centrale (10), lorsque le dispositif de détection mobile (4) détecte un dispositif d'équipement mobile (2) à l'intérieur de la distance prédéfinie (E).

6. Système de surveillance (1) selon l'une quelconque des revendications 1 à 5, **caractérisé en ce qu'**un dispositif de détection mobile (4) respectif est fermement attribué à un utilisateur individuel et est constitué pour notifier l'utilisateur à l'unité centrale (10).

7. Système de surveillance (1) selon l'une quelconque des revendications 1 à 6, **caractérisé en ce qu'**au moins un dispositif de détection mobile (4) est partie constituante d'un vêtement d'un utilisateur.

8. Système de surveillance (1) selon l'une quelconque des revendications 1 à 7, **caractérisé en ce qu'**au moins un dispositif de détection fixe (3) est constitué pour identifier un dispositif d'équipement mobile (2) détecté par lui et pour notifier une information d'identification (T1-T4) spécifiant le dispositif d'équipement identifié à l'unité centrale (10).

9. Système de surveillance (1) selon l'une quelconque des revendications 1 à 8, **caractérisé en ce qu'**au moins un dispositif de détection mobile (4) est constitué pour identifier un dispositif d'équipement mobile (2) détecté par lui et pour notifier une information d'identification (T1-T4) spécifiant le dispositif d'équipement identifié à l'unité centrale (10).

10. Système de surveillance (1) selon l'une quelconque des revendications 1 à 9, **caractérisé en ce qu'**au moins un dispositif de détection mobile (4) est constitué pour détecter une pluralité de dispositifs d'équipement mobiles (2) se trouvant simultanément à l'intérieur de la distance prédéfinie (E) par rapport au dispositif de détection mobile (4) et pour notifier la pluralité à l'unité centrale (10).

11. Système de surveillance (1) selon l'une quelconque des revendications 1 à 10, **caractérisé en ce que** l'unité centrale (10) est constituée pour déterminer les positions réelles des dispositifs d'équipement mobiles (2) dans l'aéronef.

12. Système de surveillance (1) l'une quelconque des revendications 1 à 11, **caractérisé en ce qu'**au moins un dispositif de détection fixe (3) est constitué pour détecter une distance réelle entre le dispositif de détection fixe (3) et le dispositif d'équipement mobile (2) à l'intérieur d'une zone environnementale prédéfinie (d) et pour notifier la distance détectée à l'unité centrale (10).

13. Système de surveillance (1) l'une quelconque des revendications 1 à 11, **caractérisé en ce qu'**au moins un dispositif de détection mobile (4) est constitué pour transmettre sa position réelle dans l'aéronef à l'unité centrale (10).

14. Système de surveillance (1) selon l'une quelconque des revendications 1 à 13, **caractérisé en ce que** les dispositifs d'équipement mobiles (2) sont constitués pour notifier leur position réelle respective à l'unité centrale (10).

15. Procédé de surveillance de dispositifs d'équipement mobiles (2), en particulier de conteneurs roulants pour une cuisine de bord de l'aéronef, disposés dans un aéronef au moyen d'un système de surveillance (1) selon l'une quelconque des revendications 1 à 14, sachant qu'au moins un dispositif de détection fixe (3) dans l'aéronef détecte un des dispositifs d'équipement mobiles (2) et une unité centrale (10) dans l'aéronef détermine un état de sécurisation réel des dispositifs d'équipements mobiles (2) sur la base de résultats de détection (DS) d'au moins un dispositif de détection (3) fixe, **caractérisé en ce qu'**au moins un dispositif de détection mobile (4) dans l'aéronef détecte en plus un dispositif d'équipement (2) quelconque mobile par rapport au dispositif de détection mobile (4) des dispositifs d'équipement mobiles à l'intérieur d'une distance prédéfinie (E) et notifie un résultat de détection (DM) respectif à l'unité centrale (10) et **en ce que** l'unité centrale (10) évalue l'état de sécurisation réel des dispositifs d'équipement mobiles (2) en tenant compte des résultats de détection (DM) d'au moins un dispositif de détection mobile (4),
sachant que l'état de sécurisation réel des dispositifs d'équipement mobiles (2) est soit un état sécurisé, soit un état non sécurisé, et
sachant que les dispositifs d'équipement mobiles (2) se trouvent dans un état sécurisé, lorsque les dispositifs d'équipement mobiles (2) se trouvent à l'intérieur d'une distance prédéfinie d'au moins un dispositif de détection fixe (3) ou d'au moins un dispositif de détection mobile (4).
